# EUROPEAN PATENT APPLICATION

(11) **EP 4 745 415 A1**
(43) Date of publication of application: **20.05.2026**
(21) Application number: 25216917.2
(22) Date of filing: 19.11.2025
(51) Int. Cl.: F16B 7/04, F16B 2/06, H01Q 1/12, E04H 12/00, F16B 2/12

(54) **FASTENING ARRANGEMENT AND METHOD FOR FASTENING AN ACCESSORY TO AN ANGLE STEEL**

(30) Priority: 19.11.2024 FI 20247165
(71) Applicant: Salomaan Konepaja Oy, 24910 Halikko As (FI)
(72) Inventor: Salomaa, Lauri, 24800 Halikko (FI); Suominen, Pasi, 25210 Vartsala (FI)
(74) Representative: Moosedog Oy

(57) **Abstract**

The invention relates to a fastening arrangement (1) and a method for fastening an accessory (2) to an angle steel (3). The fastening arrangement (1) comprises a frame (7) elongated in the direction of its center line (18), at the first end (8) of which an angle steel fastener (9) is arranged and at the second end (10) an accessory fastener (11) can be arranged. The frame (7) has a corner support (12) which is adapted to be arranged against the corner (4) of the angle steel and/or against the sides (5, 6) leading from the corner in different directions. The angle steel fastener (9) comprises
- a first fastening arm (21) supported on the frame (7) and comprising a first claw (22) for gripping a first side end (5a) of the angle steel;
- a second fastening arm (31) supported on the frame (7) and comprising a second claw (32) for gripping a second side end (6a) of the angle steel.

The frame (7) comprises two suitable fastening points for the first and/or second fastening arm (21, 31), such as openings (26), symmetrically with respect to the center line (18) of the frame. The angle steel (3) is arranged to be securely tightened between the corner support (12) and the first claw (22) and the second claw (23) of the angle steel fastener (9).

## Description

### TECHNICAL FIELD OF THE INVENTION

The object of the invention is a fastening arrangement and method for fastening an accessory to an angle steel as set forth in the preambles of the independent claims set forth below.

### STATE OF THE ART

Angle steel is commonly used in structures, for example as reinforcement or as a load-bearing structure. An angle steel is a steel profile with an L-shaped cross-section. The sides forming the L can be in different positions relative to each other, but the most common angle steel comprises a first and second side arranged at a right angle to each other. The sides meet at an angle, forming an inner corner on the inside and an outer corner on the outside. In an equal-sided angle steel, the sides are of the same length. In an unequal-sided angle steel, one side is longer than the other.

Accessories can be fastened to angle steel by, for example, screwing, riveting, welding or compression joint.

Especially, the fastening to angle steel of heavy or valuable accessories, or those that are fastened high, is demanding. The fastening of accessories that support people, such as ladders and walkways, to angle steel must be sturdy and secure.

Fastening accessories securely to angle steel is often difficult, especially if the fastening needs to be removable and refastenable when needed. The fasteners are difficult and heavy to use, and their hold is not always satisfactory.

Publication DE 19934656 C2 describes a fastening arrangement for fastening an accessory to an angle steel.

### OBJECT OF THE INVENTION

The object of the present invention is to reduce or even eliminate the above-mentioned problems occurring in the state of art.

It is an object of the present invention to provide a solution that makes fastening accessories to an angle steel easier and more efficient.

It is an object of the present invention to facilitate and enhance the efficiency of fastening to angle steel heavy or valuable accessories, or accessories that are to be fastened at high altitudes.

It is an object of the present invention to provide a solution that enables the fastening of human-supporting accessories, such as ladders and walkways, to angle steel to be firm and secure.

It is an object of the present invention to provide an inexpensive, reliable and durable method for fastening accessories to angle steel.

### BRIEF DESCRIPTION OF THE INVENTION

In order to achieve, among other things, the above-mentioned objects, the fastening arrangement, method and other objects of the invention are characterized by what is presented in the accompanying independent patent claims.

The embodiments and advantages mentioned in this text apply, as applicable, to the fastening arrangement and method according to the invention, as well as to other objects of the invention, although it is not always mentioned separately.

A typical fastening arrangement according to the invention is intended for fastening an accessory to an angle steel. The angle steel comprises a corner and a first side and a second side that meet each other in the said corner and lead in different directions from there. The fastening arrangement comprises a frame. An angle steel fastener is arranged on the frame, with which fastener it is fastened to the angle steel. An accessory fastener can be arranged on the frame, which fastener can fasten to the accessory. The fastening arrangement comprises a corner support, which is arranged on the frame. The corner support is fitted to be arranged against the corner of the angle steel and/or against the sides leading from the corner in different directions. The angle steel fastener comprises
- a first fastening arm supported on the frame and comprising a first claw for gripping an end of the first side of the angle steel;
- a second fastening arm supported on the frame and comprising a second claw for gripping an end of the second side of the angle steel,

The angle steel is arranged to be securely tightened between the corner support and the first claw and the second claw of the angle steel fastener.

The frame of the fastening arrangement is elongated in the direction of its center line. The angle steel fastener is arranged at a first end of the frame in the direction of the center line and an accessory fastener can be arranged at a second end of the frame in the direction of the center line.

The frame of the fastening arrangement comprises two suitable fastening points, such as openings, for the first fastening arm, symmetrically with respect to the center line of the frame.

The claw may comprise a wedge-shaped recess opening towards the frame. In this case, the wedge-shaped recess of the first claw can be arranged against the end of the first side of the angle steel and the wedge-shaped recess of the second claw can be arranged against the end of the second side of the angle steel.

In a typical method according to the invention, an accessory is fastened to an angle steel by a fastening arrangement. The angle steel comprises a corner and a first side and a second side that meet each other in the corner and lead from it in different directions. The method comprises at least the following steps:
- the frame of the fastening arrangement is fastened to the angle steel with an angle steel fastener;
- the frame of the fastening arrangement is fastened to the accessory with an accessory fastener;
- the corner of the angle steel and/or the sides of the angle steel leading from the corner in different directions are fitted at least partially against a corner support of the frame of the fastening arrangement;
- the first fastening arm and the second fastening arm of the angle steel fastener are supported on the frame. Each fastening arm comprises a claw at a distance from the frame, which claw is used to grip an end of a side of the angle steel.
- the angle steel is securely tightened between the corner support and the first claw and the second claw of the angle steel fastener.

The frame of the fastening arrangement is elongated in the direction of its center line. The angle steel fastener is in the direction of the center line at the first end of the frame. The accessory fastener is in the direction of the center line at the second end of the frame. Now, in the method
- the first end of the frame is fastened to the angle steel with the angle steel fastener;
- the second end of the frame is fastened to the accessory with the accessory fastener.

The frame comprises two suitable fastening points, such as openings, for the first fastening arm symmetrically with respect to the center line of the frame, whereby two first and/or second fastening arms can be fastened to one frame symmetrically with respect to the center line of the frame.

Typically, the method according to the invention uses a fastening arrangement according to the invention. Different embodiments of the fastening system according to the invention can be used in embodiments of the method according to the invention.

One way to describe the invention is to say that now the angle steel is subjected to a compressive force from three different directions: The direction of the first force is from the corner support of the frame of the fastening arrangement towards the corner of the angle steel and/or the sides starting from the corner. The direction of the second force is from the first claw to the end of the first side of the angle steel and towards the frame. The direction of the third force is from the second claw to the end of the second side of the angle steel and towards the frame.

One way to describe the invention is to say that the first and second claws press the angle steel at the ends of its sides in the direction of the fastening arms towards the frame of the fastening system. At the same time, the corner support of the frame presses the angle steel towards the first and the second claw.

The invention allows for a very high compressive force to be applied to the angle steel. The possible wedge-shaped shape of the claw enhances the compressive force and facilitates the installation of the fastening system.

The fastening arrangement according to the invention is lightweight and can be packed into a small space. Usability is improved and logistics costs are reduced.

The frame of the fastening arrangement according to the invention can now be made in one piece. This simplifies and strengthens the fastening.

The two or more fastening points for the first fastening arm formed in the frame, such as threaded rod openings, allow the most suitable fastening point to be selected.

When the fastening points of the first fastening arm are arranged symmetrically with respect to the center line of the frame, it is possible to easily install the same fastening in either direction. If the fastening points are mounted on top of each other, typically one first fastening arm mounted at the upper fastening point is sufficient, as it takes up most of the load. The invention also enables the fastening of two first fastening arms to one frame symmetrically with respect to the center line of the frame.

In one embodiment of the invention, one or more fastening points for a second fastening arm, such as threaded rod openings, are formed in the frame at the center line of the frame.

In one embodiment of the invention, two or more fastening points for the second fastening arm, such as threaded rod openings, are formed in the frame symmetrically with respect to the center line of the frame on different sides of the center line.

In one embodiment of the invention, the accessory fastened to the angle steel is an accessory supporting or carrying people, such as a ladder or a walkway. In one embodiment, the accessory is an electrical device, such as an antenna, broadcast electronics, cable, flight light. In one embodiment, the accessory is a mechanical thing, such as a sign, a traffic sign, a water pipe. In one embodiment, the accessory is a mount, such as a fastener, a pipe or a beam for fastening one of the above-mentioned accessories, for example a pipe to which an electrical device can be fastened or an antenna fastener for fastening an antenna to the angle steel.

In one embodiment, one accessory is fastened to an angle steel with at least two fastening arrangements according to the invention. In one embodiment of the invention, a ladder, a walkway, an antenna fastener or a solar panel mount is fastened to an angle steel with at least two fastening arrangements. With two or more fastening arrangements, a rigid and firm structure can be created for fastening even a large accessory.

Thanks to the invention, the fastening arrangement can be arranged as part of a load-bearing structure formed by angle steel. For example, a pylon or other structure can be stiffened by fastening, in accordance with the invention, the same supporting equipment to two different points of the structure.

In one embodiment of the invention, the angle steel is part of the frame of a pylon or other tall structure, for example its load-bearing frame. Fastening of accessories to a tall structure is made easier and the fastening becomes sturdy.

In one embodiment of the invention, the corner support is a for example rectangular recess formed in the frame. Walls of the recess are arranged to fit against the corner of the angle steel and/or the sides of the angle steel leading in different directions from the corner. In this way, supporting the fastening system on the corner of the angle steel is firm and simple.

In one embodiment of the invention, the first fastening arm and the second fastening arm are threaded rods or bolts. A threaded rod and bolt are simple, firm and reliable.

In one embodiment of the invention, the first and the second claw have at least one opening suitable for the fastening arm. The fastening arrangement comprises tightening means for the first and the second claw, which tightening means comprise tighteners, such as a nut or a locking form for moving the first and the second claw relative to the frame and tightening them securely in place relative to the fastening arm. In this way, the angle steel can be tightened securely between the corner support and the first claw and the second claw. Moving the claw in the fastening arm, such as a threaded rod, and tightening it securely to the fastening arm is easy and reliable.

In one embodiment of the invention, the frame of the fastening arrangement comprises suitable fastening points, such as openings, for the first and the second fastening arm. The fastening arrangement comprises tightening means for the first and the second fastening arm, which comprise tighteners, such as a nut or a locking form for the first and the second fastening arm for moving them in relation to the frame and tightening them securely in place in relation to the frame. This way, the angle steel can be tightened securely between the corner support and the first claw and the second claw. Moving the fastening arm, such as a threaded rod, in the frame and tightening it securely to the frame is easy and reliable.

In one embodiment, the first and second fastening arms are perpendicular to each other. In one embodiment, the first fastening arm is parallel to the center line of the frame. Fastening systems constructed in this manner are firm and versatile.

The fastening arm may be movable or non-movable relative to the frame. In one embodiment of the invention, the first and/or the second fastening arm is supported on the frame at its first end.

The claw may be movable or non-movable relative to the fastening arm. In one embodiment of the invention, the first and/or the second claw is at one end of the fastening arm.

In one embodiment of the invention, the first and/or the second fastening arm is removable from the frame and replaceable with another fastening arm of a different length. This allows the same fastening arrangement to be suitable for different situations, for example, for angle steels of different sizes by changing the fastening arm.

In one embodiment of the invention, the fastening arrangement comprises an accessory fastener at the second end of the frame for fastening to an accessory. The accessory fastener may also be located at another point on the frame. There may be several accessory fasteners in the same fastening arrangement.

In one embodiment of the invention, the frame, the first claw and/or the second claw are formed from a bent sheet material known per se. For example, the frame may be bent into an elongated profile, U-shaped in cross-section. The sheet material may be of thin plate, for example 0.5 mm-10 mm or 0.5 mm-3 mm thick. The bent sheet material, such as a bent metal sheet, such as a steel sheet, can be arranged to be light and strong. The metal sheet material may be manufactured, for example, by hot rolling or cold rolling. Manufacture of the parts is thus fast and inexpensive. The sheet material may be pre-coated, whereby the parts do not need to be hot-dip galvanized or otherwise surface-treated. It is easy to arrange bends and fasteners, such as openings, in the sheet material at desired points and directions.

In one embodiment of the invention, the frame is conical, wider at one end than at the other. This easily provides a relatively large surface area at the first end of the frame, which strengthens the fastening against the angle steel.

### BRIEF DESCRIPTION OF THE FIGURES

The invention will be described below in more detail with reference to the accompanying schematic drawing, in which
- Figure 1: shows a side view of a fastening arrangement according to the invention, fastened to a frame structure of a pylon;
- Figure 2: shows the fastening arrangement of Figure 1 viewed from above;
- Figure 3: shows a perspective view of another fastening arrangement according to the invention, and
- Figure 4: shows a frame of the fastening system according to the invention in a plate-like form before edging.

### DETAILED DESCRIPTION OF EXAMPLES OF THE FIGURES

For the sake of clarity, the same reference numerals are used for some corresponding parts.

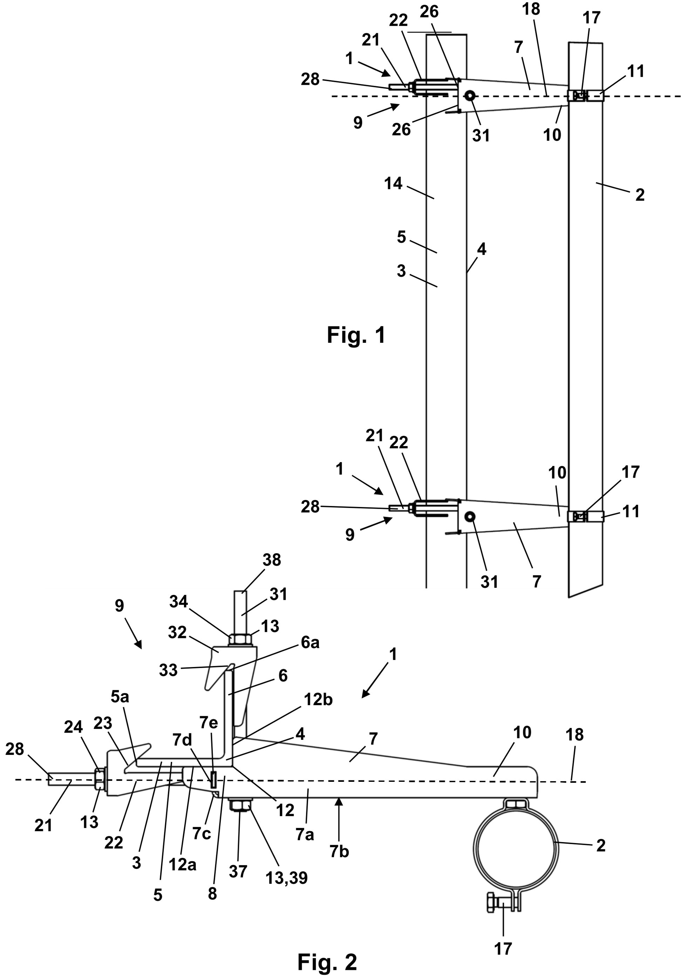

Figures 1 and 2 show a vertical angle steel 3, which is part of a frame structure of a pylon 14. A pole 2 with a circular cross-section is fastened to the angle steel 3 by means of two fastening arrangements 1 according to the invention. The pole 2 is fastened to an accessory fastener 11 at a second end 10 of a elongated frame 7 of the fastening arrangement. The accessory fastener 11 is arranged around the pole and tightened in place by tightening means 17. The pole 2 can be used as a fastening mount for an accessory. For example, an antenna or some other electrical device can be fastened to the pole 2. If the pole 2 is hollow, piping can be introduced inside it into the pylon, or a cable for example to a transmission antenna at the pylon.

The angle steel has a corner 4 and a first side 5 and a second side 6 meeting at the corner and leading in different directions from it. Sides 5 and 6 are the same length when measured from corner 4 to the ends 5a and 6a of sides. The sides are at a 90 degree angle to each other.

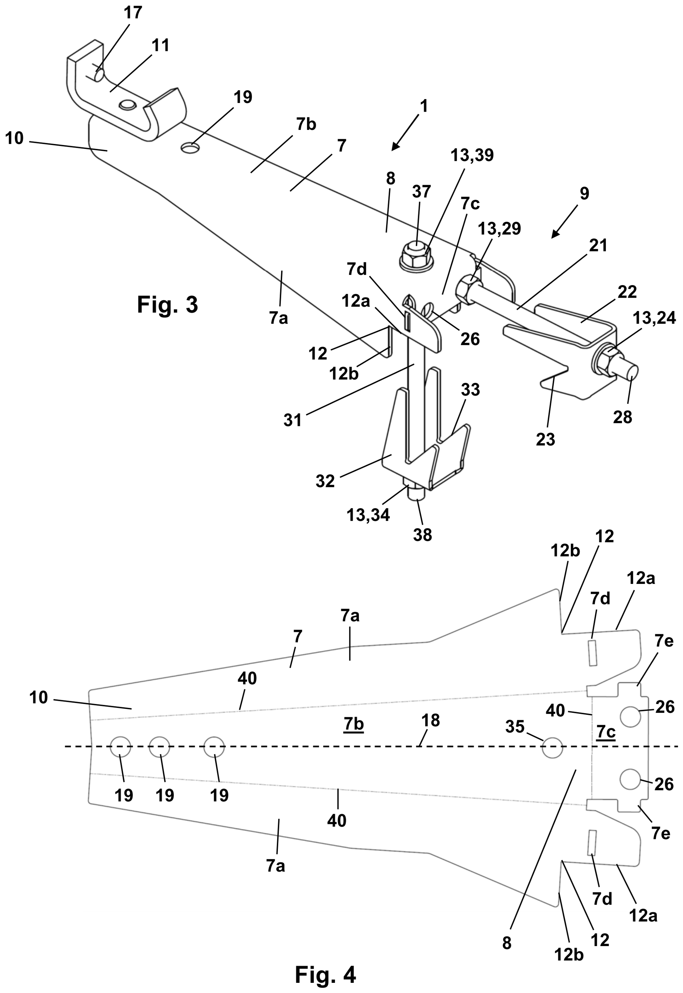

The fastening arrangement 1 of Figures 1 and 2 is shown fastened to the angle steel 3 and the pole 2. The fastening arrangement 1 of Figure 3 is shown detached from other structures. Both fastening arrangements 1 correspond mainly to each other in terms of their working principle and structure.

An angle steel fastener 9 is arranged at the first end 8 of the elongated frame 7 of the fastening arrangement for fastening to the angle steel 3. In Figures 1 and 2, an accessory fastener 11 is arranged at the second end 10 of the frame 7, to which accessory fastener the pole 2 is fastened. In Figure 3, the accessory fastener 11 is different, for example, a ladder can be fastened to it. In Figures 3 and 4, the front part of the frame has three fastening openings 19 of the accessory fastener, which are formed on the center line 18 of the frame. The accessory fastener 11 is fastened to the fastening opening 19 closest to the end of the frame.

The angle steel fastener 9 comprises an angle steel corner support 12, 12a, 12b formed at the first end 8 of the frame, as well as claws 22 and 32 fastened to the frame 7 via threaded rods 21 and 31, as well as the necessary tightening and fastening means, such as nuts 13.

The frame 7 is made of bent sheet material in a U-shape. When viewed in the direction of Figure 2, only one side 7a of the U-shape of the frame is visible. In the figure, the bottom of the U-shape is at the bottom edge of the frame. An end wall 7c of the frame is formed at the first end 8 of the frame by bending the end of the bottom 7b perpendicular to the bottom 7b, upwards in Figure 2. A locking opening 7d is formed in the side 7a of the frame, in which locking opening a locking form 7e of the edge of the end wall 7c of the frame is positioned. Thus, the shape of the first end 8 of the frame 7 is firm.

A rectangular recess, i.e. a corner support 12, is formed in the first end 8 of the frame. The corner 4 of the angle steel and the sides 5 and 6 of the angle steel are fitted against the walls 12a and 12b of the corner support.

A first and a second threaded rod 21 and 31 are fastened to the frame 7 perpendicular to each other. The first threaded rod 21 is longitudinal to the frame 7, i.e. parallel to the center line 18 of the frame, i.e. horizontal in Figures 1 and 2. The second threaded rod 31 is perpendicular to the longitudinal direction of the frame 7, i.e. horizontal in Figure 1 and vertical in Figure 2. The first threaded rod 21 is supported from its first end (not shown) in the first threaded rod opening 26 formed in the end wall 7c of the frame and tightened to the end wall 7c by the first threaded rod tightening means 29, i.e. the nut 13. The second threaded rod 31 is supported from its first end 37 in the second threaded rod opening 35 formed in the bottom 7b of the frame and tightened to the bottom 7b by the second threaded rod tightening means 39, of which the nut 13 is shown in the figure.

A first claw 22 is fastened to the first threaded rod 21 by means of the first claw tightening means 24, i.e., the nut 13. The claw 22 has a wedge-shaped recess 23 opening towards the frame 7. The recess 23 is tightened against the end 5a of the first side of the angle steel. A second claw 32 is fastened to the second threaded rod 31 by means of the second claw tightening means 34, i.e., the nut 13. The claw 32 has a wedge-shaped recess 33 opening towards the frame 7. The recess 33 is tightened against the end 6a of the second side of the angle steel. The angle steel 3 is thus securely tightened between the corner support 12, the first claw 22, and the second claw 23.

Figure 1 shows how the first threaded rods 21 are located slightly above the center line 18 of the frame 7 in the figure. The end wall 7c of the frame has, symmetrically on both sides of the center line 18, two alternative openings 26 for the first threaded rod, one above the other in Figure 1. The threaded rod 21 is fastened to the upper one of these in Figure 1. Two first threaded rods 21 could also be fastened to one frame 7.

Figure 4 shows the frame 7 of the fastening system according to the invention as a plate-like blank before the folds are edged into it. The edgings are made along lines 40 by folding the sides 7a of the frame and the end wall 7c of the frame 90 degrees downwards in the figure with respect to the bottom 7b of the frame. At the same time, the locking forms 7e of the end wall of the frame set in the locking openings 7d of the side of the frame and lock the frame 7 into the shape shown in Figures 1-3. Figure 4 shows how the fastening openings 19 of the accessory fastener and the fastening point of the second fastening arm, i.e. the threaded rod opening 35, are at the center line 18 of the frame. Figure 4 also shows how the two openings 26 of the first fastening arm formed in the end wall 7c of the frame are symmetrically on both sides of the center line 18, at the same distance from the center line 18.

The invention is not intended to be limited to the examples presented, but the scope of protection is determined by the independent claims. The dependent claims present some advantageous embodiments of the invention.

### DRAWING PARTS LIST

1 fastening arrangement
2 accessory, pole
3 angle steel
4 angle steel corner
5 first side of angle steel
5a end of the first side
6 second side of angle steel
6a end of the second side
7 frame of the fastening arrangement
7a side of the frame
7b bottom of the frame
7c end wall of the frame
7d locking opening of the frame side
7e locking form of the frame end wall
8 first end of the frame
9 angle steel fastener
10 second end of the frame
11 accessory fastener
12 corner support
12a first wall of the corner support
12b second wall of the corner support
13 nut
14 pylon
17 tightening means of the accessory fastener
18 center line of the frame
19 fastening opening of the accessory fastener
21 first fastening arm (first threaded rod)
22 first claw
23 wedge-shaped recess of the first claw
24 first claw tightening means
26 first fastening arm opening
28 second end of the first fastening arm
29 first fastening arm tightening means
31 second fastening arm (second threaded rod)
32 second claw
33 wedge-shaped recess of the second claw
34 second claw tightening means
35 second fastening arm opening
37 first end of second fastening arm
38 second end of the second fastening arm
39 second fastening arm tightening means

## Claims

1. A fastening arrangement (1) for fastening an accessory (2) to an angle steel (3), which angle steel (3) comprises a corner (4) and a first side (5) and a second side (6) which meet each other at the corner and lead from it in different directions, which fastening arrangement (1) comprises
- a frame (7) in which an angle steel fastener (9) is arranged for fastening to the angle steel (3) and in which frame an accessory fastener (11) can be arranged for fastening to the accessory (2),
- a corner support (12) arranged in the frame (7) and adapted to be arranged against the corner (4) of the angle steel and/or against the sides (5, 6) leading from the corner in different directions;
whereby the angle steel fastener (9) comprises
- a first fastening arm (21) supported on the frame (7) and comprising a first claw (22) for gripping a first side end (5a) of the angle steel;
- a second fastening arm (31) supported on the frame (7) and comprising a second claw (32) for gripping a second side end (6a) of the angle steel,
whereby the angle steel (3) is arranged to be securely tightened between the corner support (12) and the first claw (22) and the second claw (23) of the angle steel fastener (9), and whereby the frame (7) of the fastening arrangement is elongated in the direction of its center line (18) and the angle steel fastener (9) is arranged at the first end (8) in the direction of the center line (18) of the frame and the accessory fastener (11) can be arranged at the second end (10) of the frame in the direction of the center line (18), **characterized in that** the frame (7) comprises two suitable fastening points for the first fastening arm (21, 31), such as openings (26), symmetrically with respect to the center line (18) of the frame.

2. A fastening arrangement (1)according to claim 1, **characterized in that** the corner support is a recess (12), for example a rectangular recess, formed in the frame, the walls (12a, 12b) of which are adapted to be arranged against the corner (4) of the angle steel and/or against the sides (5, 6) of the angle steel leading from the corner in different directions.

3. A fastening arrangement (1) according to claim 1 or 2, **characterized in that** the first fastening arm (21) and the second fastening arm (31) are threaded rods or bolts.

4. A fastening arrangement (1) according to any previous claim, **characterized in that** the first claw (22) and the second claw (32) have an opening suitable for the fastening arm and that the fastening arrangement (1) comprises tightening means (24, 34) for the first and the second claw, which tightening means comprise tighteners, such as a nut (13) or a locking form, for moving the first claw (22) and the second claw (32) relative to the frame (7) and tightening them securely in place relative to the fastening arm (21, 31).

5. A fastening arrangement (1) according to any previous claim, **characterized in that** the fastening arrangement (1) comprises first and second fastening arm tightening means (29, 39), which comprise tighteners, such as a nut (13) or a locking form, for moving the first fastening arm (21) and the second fastening arm (31) relative to the frame (7) and tightening them securely in place relative to the frame (7).

6. A fastening arrangement (1) according to any previous claim, **characterized in that** the first fastening arm (21) is parallel to the center line (18) of the frame.

7. A fastening arrangement (1) according to any previous claim, **characterized in that**
- the first claw (22) comprises a wedge-shaped recess (23) which is arrangeable against the end (5a) of the first side of the angle steel, and
- the second claw (32) comprises a wedge-shaped recess (33) which is arrangeable against the end (6a) of the second side of the angle steel.

8. A fastening arrangement (1) according to any previous claim, **characterized in that** the first and/or the second fastening arm (21, 31) is detachable from the frame (7) and replaceable with another fastening arm of a different length.

9. A fastening arrangement (1) according to any previous claim, **characterized in that** the fastening arrangement comprises an accessory fastener (11) at the second end (10) of the frame for fastening to the accessory (2).

10. A fastening arrangement (1) according to any previous claim, **characterized in that** the frame (7), the first claw (22) and/or the second claw (32) are formed from bent sheet material.

11. A method for fastening an accessory (2) to an angle steel (3) by means of a fastening arrangement (1), the angle steel (3) comprising a corner (4) and a first side (5) and a second side (6) meeting each other in the corner and leading therefrom in different directions, in which method
- a frame (7) of the fastening arrangement is fastened to the angle steel (3) with an angle steel fastener (9);
- the frame (7) of the fastening arrangement is fastened to the accessory (2) with an accessory fastener (11);
- the corner (4) of the angle steel and/or the sides (5, 6) leading from the corner in different directions are fitted at least partially against a corner support (12) of the frame (7) of the fastening arrangement;
- a first fastening arm (21) and a second fastening arm (31) of the angle steel fastener (9) are supported on the frame (7), each of the fastening arms (21, 31) comprising a claw (22, 32) at a distance from the frame, with which claw a side end (5a, 6a) of the angle steel is gripped;
- the angle steel (3) is tightened securely between the corner support (12) and the first claw (22) and the second claw (32) of the angle steel fastener (9),
whereby the frame (7) of the fastening arrangement is elongated in the direction of its center line (18), and the angle steel fastener (9) is in the direction of the center line (18) at the first end (8) of the frame and the accessory fastener (11) is in the direction of the center line (18) at the second end (10) of the frame, whereby in the method
- the first end (8) of the frame is fastened to the angle steel (3) with the angle steel fastener (9); and
- the second end of the frame (10) is fastened to the accessory (2) with the accessory fastener (11),
**characterized in that** the frame (7) comprises two suitable fastening points for the first fastening arm (21), such as openings (26), symmetrically with respect to the center line (18) of the frame, whereby two first fastening arms (21) can be fastened to one frame (7) symmetrically with respect to the center line (18) of the frame.

12. A method according to claim 11, **characterized in that** the first fastening arm (21) and the second fastening arm (31) are threaded rods or bolts which are fastened to a suitable opening for the fastening arm in the first claw (22) and the second claw (32), and that the first claw (22) and the second claw (32) are moved relative to the frame (7) and are securely tightened in place relative to the fastening arm (21, 31) by means of tighteners, such as a nut (13) or a locking form.

13. A method according to claim 11 or 12, **characterized in that** the first fastening arm (21) and the second fastening arm (31) are threaded rods or bolts which are fastened to a fastening arm fastening point in the frame (7), such as a suitable opening (26, 35), and that the first fastening arm (21) and the second fastening arm (31) are securely tightened in place relative to the frame (7) by means of tighteners (29, 39), such as a nut (13) or a locking form.

14. A method according to any previous claim 11 to 13, **characterized in that** the first and/or second fastening arm (21, 31) is removed from the frame (7) and replaced with another fastening arm of a different length.

15. A method according to any previous claim 11 to 14, **characterized in that** the accessory is a ladder (2), a walkway, an antenna fastener or a solar panel mount, whereby in the method the accessory (2) is fastened to the angle steel (3) by at least two fastening arrangements (1).
